(19) Europäisches Patentamt
European Patent Office
Office européen des brevets

(11) Publication number: **0 270 315 B1**

(12) **EUROPEAN PATENT SPECIFICATION**

(45) Date of publication of patent specification: **02.01.92**

(51) Int. Cl.[5]: **B01J 27/16**, B01J 27/185, C10G 45/06

(21) Application number: **87310492.1**

(22) Date of filing: **27.11.87**

# (54) Synthesis of an amorphous magnesia-alumina-aluminum phosphate support for use in resid upgrading catalyst.

(30) Priority: **05.12.86 US 938476**

(43) Date of publication of application:
**08.06.88 Bulletin 88/23**

(45) Publication of the grant of the patent:
**02.01.92 Bulletin 92/01**

(84) Designated Contracting States:
**BE DE FR GB IT NL SE**

(56) References cited:
**EP-A- 0 131 946**
**US-A- 4 223 184**
**US-A- 4 385 994**
**US-A- 4 385 994**
**US-A- 4 407 730**

(73) Proprietor: **MOBIL OIL CORPORATION**
**150 East 42nd Street**
**New York New York 10017(US)**

(72) Inventor: **Angevine, Philip Jay**
**10 Kent Court**
**West Deptford New Jersey 08051(US)**
Inventor: **Chu, Pochen**
**1173 Ollerton Road**
**West Deptford New Jersey 08066(US)**
Inventor: **Degnan, Thomas Francis, Jr.**
**40 N. Homestead Drive**
**Yardley Pennsylvania 19067(US)**
Inventor: **Kirker, Garry Wayne**
**18 Old Mill Road**
**Sewell New Jersey 08080(US)**

(74) Representative: **Colmer, Stephen Gary**
**Patent Department c/o Mobil Services Company Limited Mobil Court 3 Clements Inn**
**London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 270 315 B1

## Description

Background of the Invention

This invention relates to the synthesis of a magnesia-alumina-aluminum phosphate support for use in resid upgrading catalyst.

It is well known that many, if not most, petroleum based stocks contain contaminants as for example, sulfur, nitrogen and metals. It is desirable, particularly if these feedstocks are to be further processed, that the contaminants be removed. This is an operation usually requiring use of a catalyst.

It has been conventional in the art to effect contaminant removal, such as sulfur removal from hydrocarbon stocks, by subjecting them to treatment with hydrogen at elevated temperature and pressure while in contact with a catalyst containing hydrogenating components. Typically the hydrogenating components of such known catalysts are Group VIB or VIII metals, or other oxides or sulfides. These hydrogenating components may be supported on a variety of well known carriers, for example, alumina, kiselguhr, zeolitic molecular sieves and other materials having high surface areas. For example, U.S. Patent No. 3,546,103 teaches hydrodesulfurization with a catalyst of cobalt and molybdenum on an alumina base.

The use of amorphous magnesia-alumina-aluminum phosphates (hereinafter abbreviated as MAAP) as supports for cracking and hydrocracking catalysts has been described in U.S. Patent Nos. 4,179,358 and 4,210,560. Typically, these materials are prepared by mixing together aqueous solutions of magnesium nitrate, aluminum nitrate and phosphoric acid and precipitating with ammonium hydroxide at a pH at about 9.0. In addition, U.S. Patent No. 4,376,067 discloses substitution of a Group IIB component, consisting of zinc or cadmium, for magnesium in an MAAP-type support for a cracking or hydrotreating catalyst.

The present invention is predicated on the discovery that by substituting some or all of the ammonium hydroxide, used in the prior art processes for making MAAP catalyst supports, with organic cations, e.g. protonated alkyl amines or quarternary alkyl ammonium hydroxides, the pore size distribution of these supports can be advantageously shifted to be more effective for catalytic use. The pore size distribution of the organically modified support is distinctly different from known MAAP materials. These materials have also been found to have advantageous hydrodemetallization characteristics when used in the hydrotreatment of atmospheric and vacuum resids.

Accordingly, the invention resides in a method of preparing an amorphous magnesia-alumina-aluminum phosphate catalyst support comprising the steps of:

(a) forming an aqueous solution containing magnesium and aluminum ions and phosphoric acid;

(b) precipitating amorphous magnesia-alumina-aluminum phosphate from the solution in the presence of source of organic cation having a size equal to or larger than 2 x $10^{-10}$m (Angstrom); and

(c) separating the precipitate.

After calcination, the catalyst support prepared by the method of the invention is magnesia-alumina-aluminum phosphate matrix of the formula:

$MgO\text{-}Al_2O_3\text{-}AlPO_4$

Normally, the magnesia-alumina-aluminum phosphate constituents are in a mole percent ratio range of from 10:80:10 to 25:10:65, preferably from 10:55:35 to 20:35:45.

The magnesia-alumina-aluminum phosohate matrix is characterized, after calcination at 500 °C for 10 hours, as amorphous and having an average pore radius of from 10 to 200 x $10^{-10}$m (A), preferably from 75 to 150 x $10^{-10}$m (A); a surface area ranging from 100 $m^2/g$ to 350 $m^2/g$, preferably from 125 $m^2/g$ to 250 $m^2/g$ and a pore volume of from 0.3 $cm^3/g$ to 1.5 $cm^3/g$, preferably from 0.7 $cm^3/g$ to 1.2 $cm^3/g$. Moreover the matrix is found to retain at least 90% of its surface area when the matrix is additionally calcined at a temperature up to about 750 °C for about 10 hours.

The magnesia-alumina-aluminum phosphate catalyst support is typically prepared by admixing together an aqueous solution of aluminum nitrate with an aqueous solution of magnesium nitrate and 85% phosphoric acid. The magnesia-alumina-aluminum phosphate catalyst support is then precipitated from the resultant solution by the addition of an alkylamine or a quaternary alkyl-ammonium hydroxide whose cation has a size equal to or greater than 2 x $10^{-10}$m (A) with or without ammonium hydroxide. The organic hydroxide compound can be an amine derivative, dialkylammonium, trialkylammonium, a tetra alkylquaternary ammonium compound, for example, tetramethylammonium hydroxide, tetraethyammonium hydroxide, tetrapropylammonium hydroxide or tetrabutylammonium hydroxide. Analogous phosphonium compounds can also he utilized, for example, tetramethylphosphonium hydroxide, tetraethylphosphonium hydroxide, tetrapropylphosphonium hydroxide or tetrabutylphosphonium hydroxide. Not only can the anion be a

hydroxide, but it can also be a halide such as chlorine or bromine anion as well as other suitable anions. Thus, a general formula for the organic compound is $R_4NOH$ or $R_4NX$ where X is a hydroxide or halide anion or other suitable anion and R is hydrogen or an alkyl group. Normally, the solution pH is maintained at or about 9.0, although the pH can be initially about 7.5 and slowly raised to pH 9.5 as the reaction proceeds.

After the magnesia-alumina-aluminum phosphate matrix has been precipitated, it is filtered from the solution, dried at about 120 °C and calcined at about 500 °C for about 10 hours using conventional apparatus. The resulting matrix after calcination is amorphous.

The resultant magnesia-alumina-aluminum phosphate is intended for use as a support for one or more catalyst metal components, which can be incorporated with the support in any manner known to those skilled in the art. For example, CoHo and Mo magnesia-alumina-aluminum phosphates can be prepared by room temperature impregnation of the support with soluble cobalt and molybdenum salts followed by drying and air calcination at 427 °C (800 °F) for three hours. It is also possible to include metals by coprecipitation. The metal components are preferably Co, Mo, Ni or W or mixtures thereof. Generally, any of the Group VIII metals of the Periodic Table of Elements can be used.

The use of organic cations during the precipitation step provides a method of introducing a unique and desirable pore size distribution into the catalyst supports of the invention. As will become apparent from the ensuing Examples the resultant materials are useful for preparation of catalyst for hydrodemetallization of resids.

The catalyst support products of the present process can be composited with known zeolitic-type material using conventional extrusion and tabletting procedures or by precipitation of magnesia-alumina-aluminum phosphates in a suspension of zeolites from 2 to 75 weight percent.

Resid hydroprocessing using a catalyst containing a support prepared by the process of the invention is conveniently performed at a hydrogen partial pressure in excess of 400 psig (2860 kPa), a temperature of 675-850 °F (357-812 °C) and LHSV of 0:1-10.

Examples 1-9

A base preparation of $MgO$-$Al_2O_3$-$AlPO_4$ amorphous support was carried out. Aqueous solutions of aluminum nitrate and magnesium nitrate were combined with a solution of phosphoric acid. Separately, a basic aqueous solution of ammonia and a quaternary ammonium hydroxide or just a basic amine was prepared. The two solutions were simultaneously added to a beaker containing distilled water as a reacting medium and neutralized at a constant pH of 9.0 by careful control of the rates of addition. The precipitate obtained was filtered, washed, dried and then calcined at 538 °C for up to 6 hours.

In Table 1, the results of eight preparations are compared demonstrating that the organic amine or organic ammonium ion profoundly affects pore size distribution.

Table 1

| Example | 1 | 2 | 3 | 4 | 5 |
|---|---|---|---|---|---|
| Moles, MgO | 0.20 | 0.05 | 0.05 | 0.05 | 0.05 |
| Moles, $Al_2O_3$ | 0.29 | 0.25 | 0.25 | 0.25 | 0.25 |
| Moles, $P_2O_5$ | 0.09 | 0.13 | 0.13 | 0.13 | 0.13 |
| Moles $NH_4OH$ | 3.5 | 2.3 | 2.7 | 2.4 | 1.9 |
| Moles Organic | 0 | 0.05[1] | 0.25[2] | 0.22[3] | 0.18[2] |
| pH | 9.0 | 9.0 | 9.0 | 9.0 | 9.0 |
| Calcination Conditions(540°C) | Air (3h) | $N_2$ (3h) Air (3h) | $N_2$ (3h) Air (3h) | $N_2$ (3h) Air (3h) | $N_2$ (3h) Air (3h) |
| BET Surface Area | | | | | |
| Surface Area $M^2/g$ | 190 | 162 | 158 | 159 | 160 |
| Pore vol, $m^3/g$ | 1.07 | 0.75 | 0.96 | 0.93 | 0.94 |
| Pore Size Dist. | | | | | |
| Pore Size, $10^{-10}$ m, Vol % | | | | | |
| 30 | 0.9 | 0.2 | 0.0 | 0.0 | 0.1 |
| 30-50 | 3.8 | 1.4 | 0.5 | 0.4 | 0.7 |
| 50-100 | 11.1 | 10.6 | 4.8 | 5.0 | 4.5 |
| 100-150 | 12.1 | 22.1 | 12.5 | 13.1 | 11.9 |
| 150-200 | 11.4 | 22.6 | 17.6 | 19.2 | 17.0 |
| 200-400 | 37.4 | 38.6 | 59.4 | 58.5 | 60.8 |
| 400-600 | 23.3 | 4.5 | 5.3 | 3.8 | 5.0 |
| Sorptions, Wt % | | | | | |
| $H_2O$ | 15.2 | 13.6 | 12.1 | 12.3 | 11.4 |
| Cyclo-$C_6$ | 10.2 | 4.5 | 3.9 | 4.3 | 4.5 |
| Normal-C | 6.3 | 4.2 | 3.7 | 3.5 | 5.1 |

Table 1 (Contd.)

| Example | 6 | 7 | 8 | 9 | |
|---|---|---|---|---|---|
| Moles, MgO | 0.05 | 0.026 | 0.05 | 0.05 | |
| Moles, $Al_2O_3$ | 0.25 | 0.12 | 0.25 | 0.25 | |
| Moles, $P_2O_5$ | 0.13 | 0.065 | 0.13 | 0.13 | |
| Moles $NH_4OH$ | 0 | 0 | 0 | 3 | |
| Moles Organic | 1.6 [2] | 4 | 2.3 [5] | 0 | |
| pH | 9.0 | 9.0 | 9.0 | 9.0 | |
| Calcination Conditions(540°C) | $N_2$ (3hr) Air (3hr) | $N_2$ (3hr) Air (3hr) | $N_2$ (3hr) Air (3hr) | $N_2$ (3hr) Air (3hr) | $N_2$ (3hr) Air (6hr) |
| BET Surface Area | | | | | |
| Surface Area $M^2$/g | 108 | 444 | 156 | 131 | |
| Pore vol, $cm^3$/g | 1.11 | 0.43 | 0.95 | 0.94 | |
| Pore Size Dist. | | | | | |
| Pore Size, $10^{-10}$ m Vol % | | | | | |
| 30 | 0.1 | 17.5 | 0.8 | 0.0 | |
| 30-50 | 0.1 | 49.2 | 1.5 | 0.0 | |
| 50-100 | 1.7 | 32.8 | 6.3 | 2.5 | |
| 100-150 | 4.4 | 0.3 | 11.4 | 7.4 | |
| 150-200 | 4.6 | 0.1 | 15.3 | 12.8 | |
| 200-400 | 35.3 | 0.0 | 62.2 | 61.6 | |
| 400-600 | 53.8 | 0.0 | 2.5 | 15.7 | |
| Sorptions, Wt % | | | | | |
| $H_2O$ | 8.9 | 32.0 | 17.3 | 9.9 | |
| Cyclo-$C_6$ | 3.3 | 19.4 | 6.5 | 3.6 | |
| Normal-$C_6$ | 3.0 | 15.2 | 5.8 | 3.7 | |

1 - Tetrapropylammonium hydroxide

2 - Tetramethylammonium hydroxide

3 - Tetraethylammonium hydroxide

4 - 211 g of 50% aqueous solution of polyethyleneimine

5 - n-propylamine

The above results show that the subject technique can be used to tailor or control pore size distribution, which is a valuable technique in the preparation of catalytic materials.

The amorphous MgO-$Al_2O_3$-$AlPO_4$ support materials of Examples 3, 5 and 8 were then converted into resid hydrotreating catalysts by impregnation with various combinations of Mo, Co, Ni, and W oxides. The properties of the resultant catalysts are given in Table 2 below:

Table 2

| | Mo/MAAP | CoMo/MAAP | NiW/MAAP |
|---|---|---|---|
| Support Example No. | 8 | 3 | 5 |
| Density, g/~~cc~~ cm$^3$ | | | |
| Packed | 0.877 | | |
| Real | 2.533 | | |
| Pore Vol, ~~cc~~ cm$^3$/g | 0.745 | 0.962 | 0.94 |
| Surface Area, $m^2$/g | 100 | 111 | 65 |
| Avg. Pore Dia., Å ($10^{-10}$ m) | 300 | 243 | 240 |
| Pore Size Distribution, * | | | |
| Pore Volume in Pores of | | | |
| 0 - 30A ($10^{-10}$ m) | 12 | 32 | - |
| 30 - 50A ($10^{-10}$ m) | 1 | - | 1 |
| 50 - 80A ($10^{-10}$ m) | 1 | - | 1 |
| 80 - 100A ($10^{-10}$ m) | 1 | 1 | 3 |
| 100 - 150A ($10^{-10}$ m) | 5 | 8 | 12 |
| 150 - 200A ($10^{-10}$ m) | 12 | 17 | 17 |
| 200 - 300A ($10^{-10}$ m) | 39 | 28 | 51 |
| 300+A ($10^{-10}$ m) | 29 | 14 | 15 |
| Sodium, ppm | 100 | 3.0 | |
| Iron, ppm | 100 | | |
| Vanadium, ppm | 20 | | |
| Nickel, wt % | 0.0040 | | 2.8 |
| $SiO_2$, wt % | 1.2 | | |
| $Al_2O_3$, wt % | 49.6 | | |
| CoO, wt % | - | 3.0 | |
| $MoO_3$, wt % | 8.0 | 11.0 | |
| $TiO_2$, wt | | | |
| $P_2O_3$ | | | |
| W, wt % | | | 31.7 |
| Sorption Capacity, wt % | | | |
| $H_2O$ | 17.3 | 12.1 | 11.4 |
| Cyclohexane | 6.5 | 3.9 | 4.5 |
| Hexane | 5.8 | 3.7 | 5.1 |
| Form | 14/30 Mesh | 14/30 Mesh | 14/30 Mesh |

* Properties on final catalyst.

Examples 10-15

The catalysts listed in Table 2 and a conventional $CoMo/Al_2O_3$ resid hydrotreating catalyst having the properties set out in Table 3 below:

Table 3

| | |
|---|---|
| **Metals Loading (wt %)** | |
| CoO | 3.5 |
| $MoO_3$ | 10.0 |
| **Physical Properties** | |
| Surface Area, $m^2/g$ | 109 |
| Real Density, g/~~cc~~ $cm^3$ | 3.629 |
| Particle Density, g/~~cc~~ $cm^3$ | 1.221 |
| Pore Volume, ~~cc~~ $cm^3$/g | 0.543 |
| Avg. Pore Dia, Å ($10^{-10}$) | 199 |
| Pore Size Distribution, % | |
| **Pore Volume in Pores of $10^{-10}$ m (Å) Diameter** | |
| 0 - 30 | 11 |
| 30 - 50 | - |
| 50 - 80 | - |
| 80 - 100 | 2 |
| 100 - 150 | 24 |
| 150 - 200 | 34 |
| 200 - 300 | 17 |
| 300+ | 12 |

were then evaluated for metals, sulfur, CCR (Conradson Carbon Residue), and asphaltene removal on shaker bomb experiments with a Arab Light vacuum resid having the properties set in Table 4:

Table 4

Properties of the Arab Light Vacuum Resid

| | |
|---|---|
| Elemental Analysis (wt %) | |
| Hydrogen | 10.68 |
| Sulfur | 3.93 |
| Nitrogen | .31 |
| CCR (Conradson Carbon Residue) | 16.96 |
| Asphaltenes (normal-$C_5$) | 10.93 |
| Metals Analysis (ppm) | |
| Nickel | 16 |
| Vanadium | 65 |
| Iron | 12 |
| Sodium | 6 |
| Kinematic Viscosity (cs) | |
| 212°F (100°C) | 496.2 |
| 300°F (150°C) | 24.6 |

Shaker bomb testing has been shown to very closely simulate the resid upgrading activities observed in continuous downflow units. See S.M. Oleck and H.S. Sherry, Fresh Water Manganese Nodules As A Catalyst For Demetallizing and Desulfurizing Petroleum Residua, Ind. Eng. Chem., Process Des. Dev., 16 - (4) 525 (1977) which is hereby incorporated by reference. Properties of these catalysts are shown in Table 2 while properties of the Arab Light vacuum resid are shown in Table 3.

The catalysts were contacted with the oil in a conventional shaker bomb apparatus at the following conditions:

| | |
|---|---|
| Oil:Catalyst (wt:wt) | 20 |
| Temperature, °C | 400 |
| $H_2$ Pressure, psig (kPa) | 2000 (13890) |
| Reaction Time, min | 80 |

A conventional apparatus is shown in J. W. Payne, C. W. Streed, and E. R. Kent, The Shaker Bomb - A New Laboratory Tool For Studying Thermal Processes, Ind. Eng. Chem., 50 (1), 47 (1958). Following each run, the catalyst and the oil were separated and both components were analyzed.

Thermal contributions were determined from a blank run at identical reaction conditions but with no catalyst present.

Table 5 presents the results of the shaker bomb experiments with the catalysts listed in Table 2, the conventional $CoMo/Al_2O_3$ catalyst and a further catalyst comprising the support of Example 9 impregnated with molybdenum oxide. From Table 5, it will be seen that the supported metal amorphous MAAP catalysts exhibited superior demetallization activity to that of the $CoMo/Al_2O_3$ catalyst.

Table 5

Comparison of Resid Upgrading Activities

| Example | 10 | 11 | 12 | 13 | 14 | 15 |
|---|---|---|---|---|---|---|
| | Thermal | CoMo/Al2O3 | Mo/MAAP | CoMo/MAAP | NiW/MAAP | Mo/MAAP |
| Cat Mesh Size | - | 1/32"(0.8mm) extrudate | 14-30 (1.2-0.5mm) | 14-30 (1.2-0.5mm) | 14-30 (1.2-0.5mm) | 8/20 (2.4-0.8 |
| Support Example No. | | | 8 | 3 | 5 | 9 |
| % Conv. to 1000°F (540°C), | 13 | 14.7 | 12.3 | - | - | - |
| Total Liquid | | | | | | |
| Product Analysis | | | | | | |
| Hydrogen, wt % | 10.58 | 10.69 | 10.75 | 10.90 | 10.11 | 11.03 |
| Sulfur, wt % | 3.47 | 2.52 | 3.48 | 2.37 | 3.00 | 3.18 |
| Nitrogen, wt % | 0.32 | 0.26 | 0.25 | 0.20 | 0.26 | 0.26 |
| Vanadium, ppm | 70 | 40 | 38 | 16 | 34 | 30 |
| Conradson Carbon | | | | | | |
| Residue, wt % | 16.00 | 13.55 | 15.46 | 13.5 | 14.53 | 14.21 |
| Asphaltenes, wt % | 8.52 | 5.40 | 5.65 | 3.70 | 8.14 | 4.88 |
| Vanadium Removal, % | - | 38 | 42 | 75 | 48 | 54 |
| CCR (Conradson Carbon Residue) Removal ~~Removal~~, % | 6 | 20 | 9 | 19 | 14 | 16 |
| Sulfur Removal, % | 12 | 36 | 15 | 40 | 24 | 19 |
| Asphaltenes | | | | | | |
| Removal, % | 22 | 51 | 48 | 66 | 26 | 55 |

Moreover, it can be seen that the CoMo/amorphous MAAP catalyst was also superior to the CoMo/$Al_2O_3$ catalyst in asphaltene removal and sulfur removal (40% vs. 36%). Thus these MAAP catalyst were consistently superior to the conventional $Al_2O_3$ catalyst for upgrading resids.

Examples 16-23

Further resid upgrading lists were performing using to conditions employed in Examples 10-15 and the results are listed in Table 6.

Table 6

Comparison or Resid Upgrading Activities

| Examples | 16 | 17 | 18 | 19 |
|---|---|---|---|---|
| Catalyst Identification | Thermal | CoMo/Al203 | CoMo/MAAP | CoMo/MAAP |
| Catalyst Mesh Size (mm) | - | 14-30 (1.2-0.5) | 14-30 (1.2-0.5) | 14-30 (1.2-0.5) |
| Support Example No. | - | - | 9 | 3 |
| Total Liquid Product | | | | |
| Hydrogen, wt % | 10.58 | 10.88 | 10.85 | 10.90 |
| Sulfur, wt % | 3.47 | 2.52 | 2.70 | 2.37 |
| Nitrogen, wt % | 0.32 | 0.26 | 0.28 | 0.20 |
| Vanadium, ppm | 70 | 33 | 25 | 16 |
| Conradson Carbon Residue, wt % | 16.00 | 14.44 | 15.28 | 13.5 |
| Asphaltenes, wt % | 8.52 | 5.10 | 5.50 | 3.70 |
| Vanadium Removal, % | - | 49 | 62 | 75 |
| Conradson Carbon Residue Removal, % | 6 | 15 | 10 | 19 |
| Sulfur Removal, % | 12 | 36 | 31 | 40 |
| Asphaltenes Removal,% | 22 | 53 | 50 | 66 |
| Pore Size Dist. of Support | | | | |
| % of Pore Volume | | | | |
| Dia. ($10^{-10}$ m) (Angstroms) | | | | |
| 0 - 30 | - | | 0.0 | 0.0 |
| 30 - 50 | - | | 0.0 | 0.5 |
| 50 - 100 | - | | 2.5 | 4.8 |
| 100 - 150 | - | | 7.4 | 12.5 |
| 150 - 200 | - | | 12.8 | 17.6 |
| 200 - 400 | - | | 61.6 | 59.4 |
| 400 - 600 | - | | 15.7 | 5.3 |
| Surface Area, $m^2/g$ | - | | 131 | 158 |

Table 6 (Contd.)

Comparison or Resid Upgrading Activities

| Examples | 20 | 21 | 22 | 23 |
|---|---|---|---|---|
| Catalyst Identification | CoMo/MAAP | CoMo/MAAP | [illegible]Mo/MAAP | CoMo/MAAP |
| Catalyst Mesh Size (mm) | 8-20 (2.4-0.8) | 8-20 (2.4-0.8) | 14-30 (1.2-0.5) | 14-30 (1.2-0.5) |
| Support Example No. | 6 | 9 | 8 | 1 |
| Total Liquid Product | | | | |
| Hydrogen, wt % | 10.93 | 11.03 | 10.75 | 10.1 |
| Sulfur, wt % | 2.85 | 3.18 | 3.48 | 3.09 |
| Nitrogen, wt % | - | 0.26 | 0.25 | 0.29 |
| Vanadium, ppm | 27 | 30 | 38 | 42 |
| Conradson Carbon Residue, wt % | 14.52 | 14.21 | 15.46 | 16.50 |
| Asphaltenes, wt % | 6.65 | 4.88 | 5.65 | 4.69 |
| Vanadium Removal, % | 58 | 54 | 42 | 35 |
| Conradson Carbon Residue Removal, % | 14 | 16 | 9 | 3 |
| Sulfur Removal, % | 27 | 19 | 15 | 21 |
| Asphaltenes Removal,% | 39 | 55 | 48 | 57 |
| Pore Size Dist. of Support | | | | |
| % of Pore Volume Dia. (Angstroms) ($10^{-10}$ m) | | | | |
| 0 - 30 | 0.1 | 0.0 | 0.8 | 0.9 |
| 30 - 50 | 0.1 | 0.0 | 1.5 | 3.8 |
| 50 - 100 | 1.7 | 2.5 | 6.3 | 11.1 |
| 100 - 150 | 4.4 | 7.4 | 11.4 | 12.1 |
| 150 - 200 | 4.6 | 12.8 | 15.3 | 11.4 |
| 200 - 400 | 35.3 | 61.6 | 62.2 | 37.4 |
| 400 - 600 | 53.8 | 15.7 | 2.5 | 23.3 |
| Surface Area, $m^2/g$ | 108 | 131 | 156 | 190 |

Comparing the results of Examples 18 and 20 in Table 6, it will be seen that the demetallization activities of the catalysts are similar (62 and 58% vanadium removal, respectively). However, the particle size of the catalyst prepared from the organically-modified support (Example 20) is much larger than the base case (Example 18) and therefore is a superior catalyst based upon the known particle size effect. This is demonstrated by Table 7 which shows the vanadium removal activity of a $CoMo/Al_2O_3$ catalyst increases with decreasing particle size.

Table 7

Resid Upgrading Performance of CoMo/$Al_2O_3$:

Effect of Particle Size

(750°F (400°C), 2000 psig (13890 kPa) $H_2$, 80 minutes)

(65 ppm V, 3.93 wt % S, 16.96 wt % CCR, 10.93 wt % Asphaltenes)

| Mesh Size | 1/32" | 14-30 (1.2-0.5 mm) | 20-24 (0.8-0.7 mm) | 35-48 (0.4-0.3 mm) | 48-150 (0.3-0.1 mm) |
|---|---|---|---|---|---|
| Mean diameter, in. (cm) | 0.03125 (0.079) | 0.033 (0.083) | 0.030 (0.076) | 0.014 (0.036) | 0.007 (0.018) |
| % Removal | | | | | |
| Vanadium | 38 | 49 | 49 | 63 | 68 |
| Asphaltenes | 51 | - | 53 | 54 | 63 |
| CCR (Conradson Carbon Residue) | 20 | 15 | 15 | 17 | 16 |
| Sulfur | 36 | 36 | 36 | 35 | 35 |

Furthermore, the superiority of an organically modified MAAP compared to one prepared using $NH_4OH$ as the precipitating medium is easily seen when Examples 18 and 23 are compared with Example 19. The catalysts prepared with MAAP without organics remove 62% and 35% vanadium compared to 75% for the organically modified material.

Because of the high pressures required for resid hydroprocessing, it is desirable from an economic standpoint to minimize reactor volume. Use of these amorphous MAAP catalysts for upgrading resids will allow a refiner to attain degree of metals, sulfur and coke precursor removal with less catalyst and therefore in a smaller reactor. Alternatively, using these MAAP catalysts in existing reactors will allow the refiner to run at lower reaction severities or to attain process resids with improved quality. The subject process is particularly attractive for FCC feed pre-treatment. Also, the present process allows the pore size distribution of the catalyst support to be varied, while the large pore volume (greater than $0.8 cm^3$ per gram) of the resultant support permits high metals capacity thereby increasing catalyst life.

## Claims

**1.** A method for preparing an amorphous magnesia-alumina-aluminum phosphate catalyst support comprising the steps of:

(a) forming an aqueous solution containing magnesium and aluminium ions and phosphoric acid;

(b) precipitating amorphous magnesia-alumina-aluminum phosphate from said solution in the presence of a source of organic cation having a size equal to or larger than $210^{-10}$m(Angstrom); and

(c) separating the precipitate.

**2.** The method of Claim 1 wherein the organic cation is an organonitrogen cation or an organophosphoric cation.

**3.** The method of Claim 2 wherein the organonitrogen cation is provided by addition to the solution of a quaternary ammonium hydroxide or an amine.

**4.** The method of any preceding claim wherein said solution has a pH of 7.5-9.5 during the precipitation step.

**5.** The method of any preceding claim and including the further step of calcining the precipitate.

**6.** The method of any preceding claim and including the further step of incorporating a catalytically active

metal or metal oxide on the support.

7. The method of Claim 6 wherein the metal is a metal of Group VIII of the Periodic Table.

**Revendications**

1. Un procédé de préparation d'un support de catalyseur amorphe à base de magnésie-alumine-phosphate d'aluminium, comprenant les étapes consistant:
   (a) à former une solution aqueuse contenant des ions magnésium et aluminium et de l'acide phosphorique;
   (b) à faire précipiter de ladite solution la matrice amorphe magnésie-alumine-phosphate d'aluminium, en présence d'une source de cations organiques ayant une taille supérieure ou égale à 2 x $10^{-10}$ m (2 Å); et
   (c) à séparer le précipité.

2. Le procédé selon la revendication 1, dans lequel le cation organique est un cation organo-azoté ou un cation organo-phosphoré.

3. Le procédé selon la revendication 2, dans lequel le cation organo-azoté est fourni par addition, à la solution, d'un hydroxyde d'ammonium quaternaire ou d'une amine.

4. Le procédé selon l'une quelconque des revendications précédentes, dans lequel ladite solution a un pH de 7,5 à 9,5 pendant l'étape de précipitation.

5. Le procédé selon l'une quelconque des revendications précédentes, comprenant l'étape supplémentaire consistant à calciner le précipité.

6. Le procédé selon l'une quelconque des revendications précédentes, qui comprend l'étape supplémentaire consistant à incorporer un métal ou un oxyde métallique à activité catalytique sur le support.

7. Le procédé selon la revendication 6, dans lequel le métal est un métal du groupe VIII du tableau périodique.

**Patentansprüche**

1. Verfahren zur Herstellung eines amorphen Magnesiumoxid-Aluminiumoxid-Aluminiumphosphat-Katalysatorträgers, welches die Schritte umfaßt:
   (a) Bildung einer wässrigen Lösung, die Magnesium- und Aluminiumionen und Phosphorsäure enthält;
   (b) Ausfällen von amorphem Magnesiumoxid-Aluminiumoxid-Aluminiumphosphat aus der Lösung in Gegenwart einer Quelle von organischen Kationen mit einer Größe, die gleich oder größer als 2 x $10^{-10}$ m (2 Angström) ist; und
   (c) Abtrennung des ausgefällten stoffes.

2. Verfahren nach Anspruch 1, worin das organische Kation ein Organostickstoff-Kation oder ein Organophosphor-Kation ist.

3. Verfahren nach Anspruch 2, worin das Organostickstoff-Kation geschaffen wird, indem der Lösung quaternäres Ammoniumhydroxid oder ein Amin zugegeben wird.

4. Verfahren nach einem der vorstehenden Ansprüche, worin die Lösung während des Fällungsschrittes einen pH-Wert von 7,5 - 9,5 aufweist.

5. Verfahren nach einem der vorstehenden Ansprüche, das den weiteren Schritt der Kalzinierung des ausgefällten Stoffes umfaßt.

6. Verfahren nach einem der vorstehenden Ansprüche, das den weiteren Schritt der Einarbeitung eines katalytisch aktiven Metalls oder Metalloxids in den Träger umfaßt.

7. Verfahren nach Anspruch 6, worin das Metall ein Metall der Gruppe VIII des Periodensystems ist.